Europäisches Patentamt

(19) European Patent Office

Office européen des brevets

(11) Publication number: **0 333 233 B1**

# EUROPEAN PATENT SPECIFICATION

(12)

(45) Date of publication of patent specification :
08.05.91 Bulletin 91/19

(21) Application number : **89107518.6**

(22) Date of filing : **24.12.86**

(51) Int. Cl.⁵ : **G05B 9/02, B05C 5/04, G05D 23/24**

(54) **Method for detecting heater circuit malfunctions in a multi-component hot melt heating system.**

(30) Priority : **22.01.86 US 821005**

(43) Date of publication of application :
**20.09.89 Bulletin 89/38**

(45) Publication of the grant of the patent :
**08.05.91 Bulletin 91/19**

(84) Designated Contracting States :
**CH DE FR GB LI**

(56) References cited :
**EP-A- 0 024 564**
**EP-A- 0 038 672**
**EP-A- 0 069 931**
**DE-A- 3 408 884**
**US-A- 4 031 355**

(60) Publication number of the earlier application in
accordance with Art. 76 EPC : **0235393**

(73) Proprietor : **NORDSON CORPORATION**
**28601 Clemens Road**
**Westlake Ohio 44145-1148 (US)**

(72) Inventor : **Locke, Philip F., Jr.**
**8796 Rockwood Court**
**Mentor Ohio 44060 (US)**
Inventor : **Ignatius, Mark J.**
**1561 Belle Avenue**
**Lakewood Ohio 44107 (US)**

(74) Representative : **Eisenführ, Speiser & Strasse**
**Martinistrasse 24**
**W-2800 Bremen 1 (DE)**

Jouve, 18, rue Saint-Denis, 75001 PARIS

## Description

This invention relates to a method of detecting heater circuit malfunctions in a multi-component hot melt heating system.

Hot melt heating and dispensing systems typically include a reservoir into which adhesive in pellet form is placed for the purpose of converting it to a molten state from which it can be selectively fed under pressure via a manifold to one ore more dispensers which connect to the manifold via respectively associated hoses. In addition to a heater in the reservoir, there may also be a heater in the manifold, as well as in each of the dispensers and the respective hoses which connect the dispensers to the manifold. Associated with each heater is a temperature sensing element, preferably a resistor whose resistance is temperature-dependent, for example, exhibiting a resistance which increases and decreases as the temperature increases and decreases, respectively.

Also associated with each component heater is a signal-controlled switch, such as a solid state relay, electronic switch, SCR, triac, etc., which is rendered conductive on a selective basis when the temperature of the component in question, as sensed by its respectively associated temperature-dependent resistor, is below a predetermined set point.

A microcomputer, which is input with the desired temperatures of the various system components which are heated, is provided. The microcomputer is responsive to the various temperature sensors for selectively energizing the heaters under closed loop control for maintaining the temperatures of the various components at the desired set point values.

From US-A-4,031,355, there is known a solid state multi-channel temperature responsive control system having thermocouples positioned to monitor the temperature at various process control locations. Each thermocouple generates an electrical sensor signal representing the monitored temperature at the corresponding control location. The sensor signal from each thermocouple is supplied to an associated channel of control circuitry which automatically compares the sensor signal with a manually adjustable set-point signal representing the desired temperature at the monitored control location. The comparison circuitry in each channel generates a difference signal reflecting variation of the monitored temperature from its set-point value. The difference signal controls an associated but electrically isolated switching circuit to regulate the application of alternating current to a control means associated with the channel. In this known system, there are also provided means for visual high/low condition alarm indication, thermocouple break protection and cold junction compensation.

EP-A2-0 038 672 discloses a washing machine control circuit incorporating a microprocessor adapted to control operation of the machine in accordance with a plurality of predetermined programmes. The microprocessor further includes a test program adapted to accelerate the rate of performance of at least some of the functional means in order to test the functional parts of the machine in a fast and efficient manner. The microprocessor of this known control circuit may also incorporate sensing means adapted to sense the performance of the functional items and provide a fault signal which may indicate which of the functional items is faulty.

EP-A1-0 069 931 describes a circuit for operating, monitoring, and diagnosing a one-channel air conditioning unit. In this known circuit the current flow through the heaters is sensed by a common current sensor and in case of a considerable deviation between the sensed value and a nominal value of the heater current a failure signal is provided.

DE-A1-34 08 884 relates to a device for sampling and displaying a plurality of temperature signals which are provided by temperature sensors and sequentially outputted by a multiplexer. The multiplexer normally scans the temperature signals with a predetermined clock frequency. It might be the case that some of the input channels of the multiplexer are not connected to temperature signals and, thus, do not receive temperature signals. If in such a case the device detects one of these input channels, the multiplexer is caused to switch over to the next input channel receiving a temperature signal, with a higher clock frequency. As a result, only temperature signals from busy input channels are displayed.

In closed loop hot melt heating and dispensing systems, it is desirable to periodically check for malfunctions, such as open circuits or short circuits, in the heater circuit and/or its associated temperature sensor. If a signal-controlled switch is short circuited, its associated heater will be energized excessively causing the component, such as a hose, to burn up or otherwine degrade. Similarly, it is desirable to determine the existence of an open circuit in the heating circuit to ensure that the hose will be maintained at the desired temperature necessary to maintain the adhesive in a molten condition as it flows between the reservoir manifold and the dispensers. The same is also true for the dispensers, manifold, and reservoir. For similar reasons it is also desirable, in conjunction with the foregoing, to determine if the temperature sensors are open-circuited or short-circuited.

Accordingly, it has been an objective of this invention to provide a method of detecting heater circuit malfunctions in a multi-component hot melt heating system, wherein each component comprises an electric heater and a signal-controlled switch connected in series and wherein the series combinations of heater and signal-controlled switch of the components are connected in parallel with one another, wherein a control electrode output line attached to a control electrode of the signal-controlled switch of each component is connected to a different channel of a multi-channel microcomputer, and wherein a temperature sensor is provided for each component, the temperature sensor being connected to the respective channel of the microcomputer, for individual closed loop temperature control of each component.

According to one aspect of the invention, this object is accomplished utilizing a method which includes the following steps :

a) The control signals from the microcomputer to the control electrodes of the signal-controlled switches of all channels are checked to determine if all are at switch-deactivation levels designed to render nonconductive their associated signal-controlled switches, wherein all sensor temperatures being above their respective set point temperatures are reflected.

b) Then, when all the control signals are at switch deactivation levels, it is determined for a sensor associated with a specific channel to be checked if the temperature thereof has risen since the time the control signal level input to its associated signal-controlled switch most recently switched to its present switch-deactivation level.

c) In response to detecting a nonincreasing sensor temperature in step b), a normal signal-control switch indication is provided.

Alternatively, in response to detecting an increasing sensor temperature in step b), the heater current flow is sensed with a current sensor common to all heater energization circuits. If significant heater current is sensed, a short circuited signal-controlled switch indication is provided. If significant heater current is not sensed, a normal signal-controlled switch indication is provided.

In accordance with another aspect of the invention, the method comprises the following steps :

a) The control signals from the microcomputer to the control electrodes of the signal-controlled switches of all the channels are checked to determine if any one is at a switch-activation level designed to render conductive its associated signal-controlled switch for at least a substantial portion of its maximum duty cycle wherein a sensor temperature substantially below its set point temperature is reflected.

b) Then, when the control signal of a channel is at a switch-activation level, it is determined for the sensor associated with that specific channel to be checked if the temperature thereof has decreased since the time the control signal level input to its associated signal-controlled switch most recently switched to its switch-activation level.

c) In response to detecting a nondecreasing sensor temperature in step b), a normal signal-controlled switch indication is provided for that channel being checked.

Alternatively, in response to detecting a decreasing sensor temperature for the channel under test in step b), momentary deactivation signals are simultaneously applied to all other channels and, while doing so, a heater current flow is sensed with a current sensor common to all the heater energization circuits. If an insignificant heater current is sensed, an open heater indication is provided for the channel being tested. If a significant heater current is sensed, a normal heater circuit indication is provided for the channel being tested.

In accordance with the invention, the temperatures of the resistive temperature-sensing devices of each channel found to be operative and properly connected are periodically sensed and compared with desired temperature set points entered and stored into the microcomputer. Utilizing closed loop control techniques, if the sensed temperature of a particular, channel is below the desired set point, the signal-controlled switch associated with that channel is activated for a proportional fraction of a cyclic control period depending upon the difference between the actual temperature and the set point temperature, with the fraction increasing and decreasing as the temperature difference increases and decreases, respectively. If the sensed temperature is above the desired set point temperature, the signal-controlled switch is not energized. In one preferred form of the invention, the cyclic control period is 300 milliseconds, and depending upon the difference between the actual and set point temperatures, the signal-controlled switch may be energized anywhere between zero percent and one hundred percent of each recurring 300 ms control period.

These and other features, objectives, and advantages of the invention will become more readily apparent from a detailed description of the invention taken in conjunction with drawings in which :

Figure 1 is a perspective view, in schematic form, of a hot melt heating and dispensing system with which the method of this invention is useful.

Figure 2 is a schematic circuit drawing in block format of a closed loop control system capable of implementing the method of this invention.

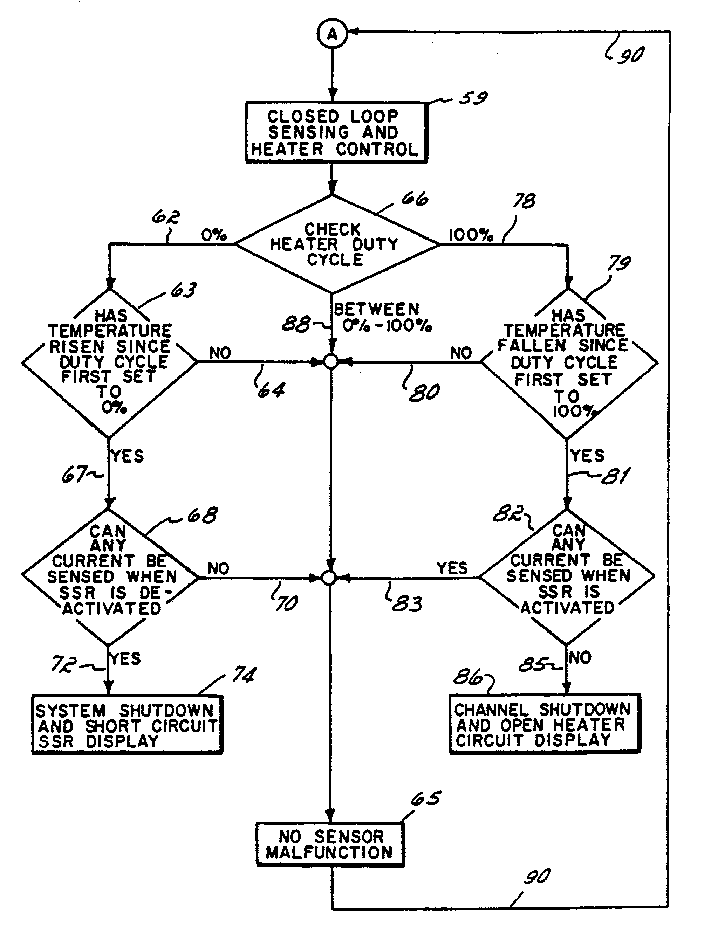

Figure 3 is a flow chart for a microcomputer implementation of the method of this invention.

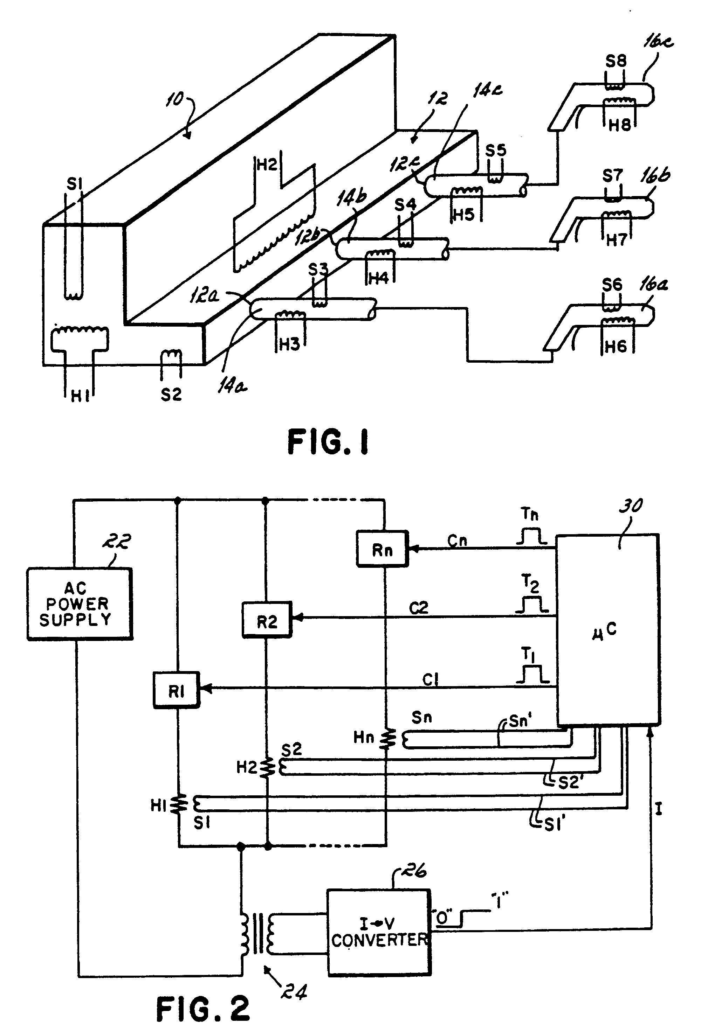

With reference to Fig. 1 a typical hot melt heating and dispensing system is shown of the type with which the channel connection error and heater circuit component malfunction detecting method can be advantageously employed. More particularly, the system includes a tank or reservoir 10 which is provided with a heater H1 which is shown schematically. Associated with the interior of the tank 10 is a temperature-sensing element S1, also shown schematically. In practice, solid pellets of adhesive material are poured into the tank 10 where they are heated by the heater H1, eventually being rendered molten when they reach a temperature which varies depending upon the composition of the adhesive. The operation of the heater H1 is under closed loop control by a microcomputer, to be described, which has connected to one channel thereof the control electrode of the signal-controlled switch R1 (shown in Fig. 2) for the reservoir heater H1 and the associated temperature-sensing element S1.

In one preferred form the temperature-sensing element S1 is a temperature sensitive resistor having a resistance characteristic which increases and decreased with increasing and decreasing temperature, respectively. Obviously, other types of detecting elements can be used.

Located at the lower portion of the reservoir 10 is a manifold 12 having several output ports 12a, 12b, 12c, etc. The manifold 12 is also provided with a heater H2 and an associated resistive temperature-sensing element S2 for assisting in maintaining adhesive in the manifold 12 at the desired melt temperature under closed loop control by the microcomputer which has connected to another channel thereof the output from temperature sensor S2 and the control electrode of the signal-controlled switch for heater H2.

One or more pumps (not shown) may also be associated with the reservoir 10 and/or manifold 12 for providing pressurized molten adhesive at the manifold output ports 12a, 12b, 12c, etc. If one or more pumps are provided, each pump may be provided with its own resistance heating element (not shown) and an associated temperature-sensing element (not shown). The pump heater circuit signal-controlled switch control electrode and associated temperature-sensing element are connected to a still further channel of the microcomputer for maintaining the temperature of the adhesive in the pump at the desired melt temperature under closed loop control.

Connected to each of the manifold output ports 12a, 12b, 12c is a hose 14a, 14b, and 14c which at its other end is connected to a selectively operable hot melt dispenser 16a, 16b, 16c, respectively. The hoses 14a, 14b, and 14c, as is well known in the art, contain heaters H3, H4, and H5, as well as associated resistive temperature-sensing elements S3, S4, and S5, respectively. Similarly, the dispensers 16a, 16b, and 16c contain heaters H6, H7, and H8, respectively, and associated resistive temperature-sensing elements S6, S7, and S8, respectively. The heater signal-controlled switch control electrode and associated temperature-sensing element of any given hose are connected to a different channel of the microcomputer to enable the microcomputer to maintain, under closed loop control, the temperature of the adhesive in the hose in question at a desired set point entered into the microcomputer. Similarly, the heater signal-controlled switch control electrode and associated temperature-sensing element of any given dispenser are connected to a different channel of the microcomputer to enable the microcomputer to maintain, under closed loop control, the temperature of the adhesive in the given dispenser at a desired set point entered into the microcomputer.

In practice, the electrical wires to the heater and temperature sensor of a dispenser are routed back along its associated hose for connection to suitable plug-type electrical connectors located proximate the manifold port to which the hose is connected. Thus, a pair of electrical wires for energizing the heater H6 of dispenser 16a would be routed back along the hose 14a to an electrical connector mounted proximate manifold port 12a. Likewise, a pair of electrical wires connected at one end to temperature-sensing element S6 of dispenser 16a are routed back along hose 14a for connection to a suitably located electrical connector which is also mounted proximate manifold port 12a to which the hose 14a is connected. In a similar fashion, electrical wires from the hose heater H3 and the temperature-sensing element S3 are routed back along the hose 14a to electrical connectors located proximate manifold port 12a. The electrical connectors located proximate manifold port 12a to which the temperature sensors S3 and S6 are connected are suitably interconnected by means (not shown) to different channels of the microcomputer which controls, in closed loop manner, the temperature of the dispenser 16a and hose 18a. The electrical connectors located proximate manifold port 12a to which heaters H3 and H6 are connected are suitably interconnected in series with their respectively associated signal-controlled switches, with each series-connected heater and signal-controlled switch combination being connected across an a.c. power supply to be described. Included in each microcomputer channel, for closed loop control of the temperature of the system component associated with said channel, are connections for the temperature sensor for the associated system component and for the control electrode of the signal-controlled switch through which the heater for that system component is energized. Thus, a channel for a given system component, e.g., dispenser 16a, includes connections to sensor S6, and connections to the signal-controlled switch which is in series with heater H6 associated with dispenser 16a. Similarly, the channel for hose 14a includes connections for sensor S3 and the signal-controlled switch control electrode in series with heater H3.

A microcomputer-based closed loop temperature control system capable of implementing the channel connection error, sensor defect, and heater circuit component malfunction checking method of this invention is shown in Fig. 2. With reference to Fig. 2, the system is seen to include a plurality of heaters H1, H2,... Hn, as well as associated temperature-sensing elemente S1, S2,... Sn, respectively. In series with each of the heaters H1, H2,.. Hn is a signal-controlled switch R1, R2,... Rn, respectively. Switch R1, heater H1, and sensor S1 are associated with a single system component, such as reservoir 10. The same is true for switch R2, heater H2, and sensor S2, which may, example, be associated with the manifold 12.

The series-connected heater and signal-controlled switch combinations R1/H1, R2/H2,... Rn/Hn ace connected in parallel, with the parallel circuit combination being connected in series with an AC power supply 22. Connected between the AC power supply 22 and the parallel combination of series-connected heaters and signal-controlled switches is the primary winding of a current transformer 24 which has its secondary winding input to a current-to-voltage converter 26, preferably an operational amplifier designed to provide a non-zero magnitude signal level corresponding to a binary "1" level when current is flowing in the primary winding of the current transformer 24. When current is not flowing through the primary of the current transformer 24 the output from the current-to-voltage converter 26 will be in the form of a logical "0" level signal. The current-to-voltage converter output signals are input to the microcomputer on line 1.

Connected to the control electcode of each of the signal-controlled switches R1, R2,... Rn, is a control line C1, C2,... Cn. When variable duty cycle control signals T1, T2,... Tn are input on line C1, C2,... Cn to the signal-controlled switches R1, R2,... Rn, the switches are rendered conductive for varying fractions of the control period, allowing AC power from supply 22 to pass therethrough to energize their respectively associated heaters H1, H2,... Hn. In a preferred form of the invention, the control signals T1, T2,... Tn are selected to have a controlled pulse width which varies between zero percent of the 300 ms control period when the sensor temperature is at or above its desired set point temperature, and one hundred percent when the sensor temperature is substantially below the desired set point temperature, with the control signal width at any given time being correlated to the magnitude of the difference between the actual sensor temperature and the desired set point temperature. The control signal width controls the duty cycle of the signal-controlled switches R1, R2,... Rn, thereby controlling the degree of energization of the associated heaters H1, H2,... Hn.

The temperature sensors S1, S2,... Sn are connected to the microcomputer 30 via line pairs shown schematically as S1', S2',... Sn'. Lines C1 and S1' associated with signal-controlled switch R1 which control energization of heater H1 constitutes one channel of the microcomputer 30, such as the channel for the reservoir 10. Similarly, lines C2 and S2' associated with signal-controlled switch R2, which controls energization of heater H2, constitutes another channel of the microcomputer 30, such as the channel for the manifold 12. Likewise, lines Cn and Sn' associated with signal-controlled switch Rn, which controls energization of heater Hn, constitutes the nth channel of the microcomputer 30, such as the channel for dispenser 16c.

In operation, the temperature of a sensor S1, S2,... Sn is determined by connecting it to a regulated constant current source while monitoring the resultant voltage thereacross. The voltage is then digitized and with the aid of a look-up table stored in the microcomputer the temperature of the sensor S1, S2,... Sn is determined. By comparing the sensor temperature with a set point value entered and stored in the microcomputer, a determination is made whether the temperature of the sensor is at or above the desired value, in which event the associated heater is not energized, or is below the set point value in which event a signal-controlled switch activating signal, T1, T2,... Tn having a width corresponding to the difference between the actual and set point temperatures, is provided on the appropriate control line C1, C2,... Cn to allow current to flow from the power supply 22 through the associated heater H1, H2,... Hn for a fraction of the 300 ms control period corresponding to the width of the control signal, and thereby elevate the temperature of the system component associated with the sensor in question to the desired level.

The microcomputer 30 periodically senses the temperatures of the various sensore S1, S2,... Sn on a time division multiplex basis, and compares the sensed temperature to the desired set point temperature for that channel. If the sensed temperature is below the set point, the microcomputer will provide an activating signal of varying duty cycle on the control line C1, C2,... Cn of the signal-controlled switch R1, R2,... Rn of the channel having its temperature sensed, in which event the associated heater H1, H2,...Hn will be energized to raise the temperature to the desired level. The magnitude of the duty cycle, as noted previously, depends on the extent to which the actual temperature is below the set point temperature. If the temperature is equal or greater than the set point, a logic zero will be provided on the control line C1, C2,... Cn of the channel whose temperature sensor is being sensed, in which event the associated signal-controlled switch will not be energized and electrical power will not be supplied to the associated heater. The foregoing time division multiplex sensing of the temperature of the sensors of the various operational channels and heater energization thereof to effect closed loop temperature control is indicated by block 59.

Periodically, the microcomputer goes through a heater circuit component malfunction checking process. More particularly, and as shown in step 66, the control signal status on line C1, C2,... Cn is checked to determine whether the respectively associated signal-controlled switches R1, R2,... Rn are conductive or nonconductive and the associated heaters H1, H2,... Hn are energized or de-energized. If in step 66 it is determined that a heater energization duty cycle is between zero percent (line 62) and one hundred percent (line 78), the process proceeds along line 88 to the "no sensor malfunction" block 65. If this check in step 66 shows that the heaters of all channels being checked are not being energized, indicating that their associated temperature sensors are above their desired set points, the process proceeds along line 62 to step 63. In step 63 the microcomputer checks to determine if the temperature of the sensor of a particular channel which it is desired to check has risen since the control signal on its control lines C1, C2,... Cn was first set to a zero percent duty cycle indicating the de-energized condition of the heater of the channel being checked. If the temperature has not risen, the process proceeds along line 64 to the "no sensor malfunction" indicating block 65. If the temperature rise inquiry in step 63 reflects that the temperature has risen since the signal on the control line C1, C2,... Cn of the channel being monitored was first set to zero percent duty cycle, the process proceeds along line 67 to step 68. In step 68 the current flowing in the heater circuit of the channel being monitored is sensed with the associated signal-controlled switch de-energized by the presence of a zero percent duty cycle on its associated control line. If there is no current flowing through the heater as sensed by the current transformer 24 and current-to-voltage converter 26, that is a logic zero level signal is provided on output line 1 to the microcomputer, the process proceeds along line 70 to the "no sensor malfunction" indicating block 65. If current flow is sensed through the heater of the channel being monitored, notwithstanding the presence of a zero percent duty cycle signal on the control line to which associated signal-controlled switch, the process proceeds along line 72 to a system shutdown and short circuited signal-controlled switch display as represented by block 74.

If in the switch control signal checking step 66 it is determined that a one hundred percent duty cycle control signal is present on the control line to any signal-controlled switch of any channel, which reflects maximum energization of the heater of that channel, such as for a duration of the 300 ms control period, the process proceeds along line 78 to step 79 wherein that channel is checked for an open circuit in the heater circuit. In step 79 an evaluation is made whether the temperature of the sensor of the channel being checked has fallen since the signal on its associated control line was first set to maximum heater energization. If it has not, the process proceeds along line 80 to the "no sensor malfunction" indicator of block 65. If the heater is being energized to the maximum extent and the temperature is not falling, the channel is deemed to be operating satisfactorily. If the temperature is falling, the process proceeds along line 81 to step 82. In step 82 the current flowing in the heater circuit is sensed when a one hundred percent duty cycle control signal is input to the associated control line of the channel being checked to render conductive its signal-controlled switch while deactivation signals are input to the signal-controlled switch control lines of all channels. If heater circuit current can be sensed, that is, a logic one signal level is output from the current-to-voltage converter 26 on line I, the process proceeds along line 83 to the "no sensor malfunction" indicator block 65. Under such circumstances, and even though the temperature has fallen since a one hundred percent duty cycle control signal appeared on the control line reflecting a desire for maximum heater energization, a sensor malfunction is not deemed to have occurred if current is flowing through the heater.

If no heater current flow in the channel being monitored is sensed in step 82, the process proceeds along line 85 to the channel shutdown and open heater circuit display. While the process can determine whether or not current is flowing through the heater circuit of the channel being monitored, if current is not flowing through the heater circuit, it is not possible to determine whether this is due to an open circuit heater, an open circuit signal-controlled switch, or an interruption in the wiring interconnecting the signal-controlled switch and heater to the AC power supply 22 and primary winding of the current transformer 24. In either case, however, it is necessary to shutdown the channel being monitored and provide an open heater circuit display. The periodic re-checking (step 66) of the various functional and properly connected channels is indicated by line 90 back to the control loop block 59.

The foregoing process reflected by steps 66 et seq., is repeated for each fully operational channel deemed to be properly connected. After all fully operational and properly connected channels have been checked, such channels are again checked in sequence and the process repeated.

## Claims

1. A method of detecting heater circuit malfunctions in a multi-component hot melt heating system, wherein each component comprises an electric heater (H1 ;... ; Hn) and a signal-controlled switch (R1 ;... ; Rn) connected in series and wherein the series combinations of heater (H1 ;... ; Hn) and signal-controlled switch (R1 ; ... ; Rn) of the components are connected in parallel with one another, wherein a control electrode output line (C1 ;... ; Cn) attached to a control electrode of the signal-controlled switch (R1 ;... ; Rn) of each component is connected to a different channel of a multichannel microcomputer (30), and wherein a temperature sensor (S1 ;... ; Sn) is provided for each component, the temperature sensor being connected to the respective channel of the microcomputer (30), for individual closed loop temperature control of each component, the method characterized by the steps of :

a) checking the control signals from the microcomputer (30) to the control electrodes of the signal-controlled switches (R1-Rn) of all channels to determine if all are at switch-deactivation levels designed to render nonconductive their associated signal-controlled switches (R1-Rn), reflecting all sensor temperatures being above their respective set point temperatures ;

b) then, when all the control signals are at switch deactivation levels, determining for a sensor (S1 ;... ; Sn) associated with a specific channel to be checked if the temperature thereof has risen since the time the control signal level input to its associated signal-controlled switch most recently switched to its present switch-deactivation level ; and

c) in response to detecting a nonincreasing sensor temperature in step b), providing a normal signal-controlled switch indication.

2. A method of detecting heater circuit malfunctions in a multi-component hot melt heating system, wherein each component comprises an electric heater (H1 ;... ; Hn) and a signal-controlled switch (R1 ;... ; Rn) connected in series and wherein the series combinations of heater (H1 ;... ; Hn) and signal-controlled switch (R1 ; ... ; Rn) of the components are connected in parallel with one another, wherein a control electrode output line (C1 ;... ; Cn) attached to a control electrode of the signal-controlled switch (R1 ;... ; Rn) of each component is connected to a different channel of a multichannel microcomputer (30), and wherein a temperature sensor (S1 ;... ; Sn) is provided for each component, the temperature sensor being connected to the respective channel of the microcomputer (30), for individual closed loop temperature control of each component, the method characterized by the steps of:

a) checking the control signals from the microcomputer (30) to the control electrodes of the signal-controlled switches (R1-Rn) of all channels to determine if all are at switch-deactivation levels designed to render nonconductive their associated signal-controlled switches (R1-Rn), reflecting all sensor temperatures being above their respective set point temperatures ;

b) then, when all the control signals are at switch deactivation levels, determining for a sensor (S1 ;... ; Sn) associated with a specific channel to be checked if the temperature thereof has risen since the time the control signal level input to its associated signal-controlled switch most recently switched to its present switch-deactivation level ; and

c) in response to detecting an increasing sensor temperature in step b), sensing heater current flow with a current sensor (26) common to all heater energization circuits, and providing a short circuited signal-controlled switch indication if significant heater current is sensed.

3. A method of detecting heater circuit malfunctions in a multi-component hot melt heating system, wherein each component comprises an electric heater (H1 ;... ; Hn) and a signal-controlled switch (R1 ;... ; Rn) connected in series and wherein the series combinations of heater (H1 ;... ; Hn) and signal-controlled switch (R1 ; ... ; Rn) of the components are connected in parallel with one another, wherein a control electrode output line (C1 ;... ; Cn) attached to a control electrode of the signal-controlled switch (R1 ;... ; Rn) of each component is connected to a different channel of a multichannel microcomputer (30), and wherein a temperature sensor (S1 ;... ; Sn) is provided for each component, the temperature sensor being connected to the respective channel of the microcomputer (30), for individual closed loop temperature control of each component, the method characterized by the steps of :

a) checking the control signals from the microcomputer (30) to the control electrodes of the signal-controlled switches (R1-Rn) of all channels to determine if all are at switch-deactivation levels designed to render nonconductive their associated signal-controlled switches (R1-Rn), reflecting all sensor temperatures being above their respective set point temperatures ;

b) then, when all the control signals are at switch deactivation levels, determining for a sensor (S1 ;... ; Sn) associated with a specific channel to be checked if the temperature thereof has risen since the time the control signal level input to its associated signal-controlled switch most recently switched to its present switch-deactivation level ; and

c) in response to detecting an increasing sensor temperature in step b), sensing heater current flow with a current sensor (26) common to all heater energization circuits, and providing a normal signal-controlled switch indication if significant heater current is not sensed.

4. A method of detecting heater circuit malfunctions in a multi-component hot melt heating system, wherein each component comprises an electric heater (H1 ;... ; Hn) and a signal-controlled switch (R1 ;... ; Rn) connected in series and wherein the series combinations of heater (H1 ;... ; Hn) and signal-controlled switch (R1 ;... ; Rn) of the components are connected in parallel with one another, wherein a control electrode output line (C1 ;... ; Cn) attached to a control electrode of the signal-controlled switch (R1 ;... ; Rn) of each component is connected to a different channel of a multichannel microcomputer (30), and wherein a temperature sensor (S1 ;... ; Sn) is provided for each component, the temperature sensor being connected to the respective channel of the microcomputer (30), for individual closed loop temperature control of each component, the method characterized by the steps of :

a) checking the control signals from the microcomputer (30) to the control electrodes of the signal-controlled switches (R1-Rn) of all the channels to determine if any one is at a switch-activation level designed to render conductive its associated signal-controlled switch (R1 ;... ; Rn), for at least a substantial portion of its maximum duty cycle reflecting a sensor temperature (S1 ;... ; Sn) substantially below its set point temperature ;

b) then, when the control signal of a channel is at a switch-activation level, determining for the sensor (S1 ;... ; Sn) associated with that specific channel to be checked if the temperature thereof has decreased since the time the control signal level input to its associated signal-controlled switch (R1 ;... ; Rn) most recently switched to its switch-activation level ; and

c) in response to detecting a nondecreasing sensor temperature in step b), providing a normal signal-controlled switch indication for that channel being checked.

5. A method of detecting heater circuit malfunctions in a multi-component hot melt heating system, wherein each component comprises an electric heater (H1 ;... ; Hn) and a signal-controlled switch (R1 ;...; Rn) connected in series and wherein the series combinations of heater (H1 ;... ; Hn) and signal-controlled switch (R1 ; ... ; Rn) of the components are connected in parallel with one another, wherein a control electrode output line (C1 ;... ; Cn) attached to a control electrode of the signal-controlled switch (R1 ;... ; Rn) of each component is connected to a different channel of a multichannel microcomputer (30), and wherein a temperature sensor (S1 ;... ; Sn) is provided for each component, the temperature sensor being connected to the respective channel of the microcomputer (30), for individual closed loop temperature control of each component, the method characterized by the steps of:

a) checking the control signals from the microcomputer (30) to the control electrodes of the signal-controlled switches (R1-Rn) of all the channels to determine if any one is at a switch-activation level designed to render conductive its associated signal-controlled switch (R1 ;... ; Rn), for at least a substantial portion of its maximum duty cycle reflecting a sensor temperature (S1 ;... ; Sn) substantially below its set point temperature ;

b) then, when the control signal of a channel is at a switch-activation level, determining for the sensor (S1 ;... ; Sn) associated with that specific channel to be checked if the temperature thereof has decreased since the time the control signal level input to its associated signal-controlled switch (R1 ;... ; Rn) most recently switched to its switch-activation level ; and

c) in response to detecting a decreasing sensor temperature for the channel under test in step b), applying momentary deactivation signals simultaneously to all other channels and while doing so sensing heater current flow with a current sensor (26) common to all the heater energization circuits, and providing an open heater indication for the channel being tested if insignificant heater current is sensed.

6. A method of detecting heater circuit malfunctions in a multi-component hot melt heating system, wherein each component comprises an electric heater (H1 ;... ; Hn) and a signal-controlled switch (R1 ;... ; Rn) connected in series and wherein the series combinations of heater (H1 ;... ; Hn) and signal-controlled switch (R1 ; ... ; Rn) of the components are connected in parallel with one another, wherein a control electrode output line (C1 ;... ; Cn) attached to a control electrode of the signal-controlled switch (R1 ;... ; Rn) of each component is connected to a different channel of a multichannel microcomputer (30), and wherein a temperature sensor (S1 ;... ; Sn) is provided for each component, the temperature sensor being connected to the respective channel of the microcomputer (30), for individual closed loop temperature control of each component, the method characterized by the steps of :

a) checking the control signals from the microcomputer (30) to the control electrodes of the signal-controlled switches (R1-Rn) of all the channels to determine if any one is at a switch-activation level designed to render conductive its associated signal-controlled switch (R1 ;... ; Rn), for at least a substantial portion of its maximum duty cycle reflecting a sensor temperature (S1 ;... ; Sn) substantially below its set point temperature ;

b) then, when the control signal of a channel is at a switch-activation level, determining for the sensor (S1 ;... ; Sn) associated with that specific channel to be checked if the temperature thereof has decreased since the time the control signal level input to its associated signal-controlled switch (R1 ;... ; Rn) most recently switched to its switch-activation level ; and

c) in response to detecting a decreasing sensor temperature for the channel under test in step b), applying momentary deactivation signals simultaneously to all other channels and while doing so sensing heater current flow with a current sensor (26) common to all the heater energization circuits, and providing a normal heater circuit indication for the channel being tested if significant heater current is sensed.

**Ansprüche**

1. Verfahren zur Erkennung von Heizkreisfehlern in einem Mehrkomponenten-Heißkleber-Beheizungssystem, bei welchem jede Komponente eine elektrische Heizung (H1 ;... ; Hn) und einen in Reihe geschalteten signalgesteuerten Schalter (R1 ;... ; Rn) aufweist und die Reihenkombinationen von Heizung (H1 ;... ; Hn) und signalgesteuertem Schalter (R1 ;...; Rn) der Komponenten parallel zueinander geschaltet sind, wobei eine Steuerelektrodenausgangsleitung (C1 ;... ; Cn), die an eine Steuerelektrode des signalgesteuerten Schalters (R1 ;... ; Rn) jeder Komponente angeschlossen ist, mit einem unterschiedlichen Kanal eines Mehrkanal-Mikrocomputers (30) verbunden ist, und bei welchem ein Temperatursensor (S1 ; ... ; Sn) für jede Komponente vorgesehen ist, wobei der Temperatursensor mit dem entsprechenden Kanal des Mikrocomputers (30) zur individuellen Temperatursteuerung jeder Komponente in einer geschlossenen Schleife verbunden ist, wobei das Verfahren durch die Schritte gekennzeichnet ist :

a) die Steuersignale vom Mikrocomputer (30) an die Steuerelektroden der signalgesteuerten Schalter (R1-Rn) sämtlicher Kanäle zu überprüfen, um zu erkennen, ob sich alle auf Schalterdeaktivierungspegeln befinden, die dazu ausgelegt sind, ihre zugehörigen signalgesteuerten Schalter (R1-Rn) nichtleitend zu machen, wodurch in Betracht gezogen wird, daß sich sämtliche Sensortemperaturen oberhalb ihrer jeweiligen Sollwerttemperaturen liegen ;

b) anschließend, wenn sich sämtliche Steuersignale auf Schalterdeaktivierungspegeln befinden, für einen an einem bestimmten Kanal angeschlossenen, zu prüfenden Sensor (S1 ;... ; Sn) zu bestimmen, ob seine Temperatur seit dem Zeitpunkt angestiegen ist, an dem der in den zugehörigen signalgesteuerten Schalter eingegebene Steuersignalpegel kürzlich auf seinen gegenwärtigen Schalterdeaktivierungspegel geschaltet worden ist ; und

c) bei Ermittlung einer nicht ansteigenden Sensortemperatur im Schritt b) eine Anzeige eines normal arbeitenden signalgesteuerten Schalters abzugeben.

2. Verfahren zur Erkennung von Heizkreisfehlern in einem Mehrkomponenten-Heißkleber-Beheizungssystem, bei welchem jede Komponente eine elektrische Heizung (H1 ;... ; Hn) und einen in Reihe geschalteten signalgesteuerten Schalter (R1 ;... ; Rn) aufweist und die Reihenkombinationen von Heizung (H1 ;... ; Hn) und signalgesteuertem Schalter (R1 ;...; Rn) der Komponenten parallel zueinander geschaltet sind, wobei eine Steuerelektrodenausgangsleitung (C1 ;... ; Cn), die an eine Steuerelektrode des signalgesteuerten Schalters (R1 ;... ; Rn) jeder Komponente angeschlossen ist, mit einem unterschiedlichen Kanal eines Mehrkanal-Mikrocomputers (30) verbunden ist, und bei welchem ein Temperatursensor (S1 ; ... ; Sn) für jede Komponente vorgesehen ist, wobei der Temperatursensor mit dem entsprechenden Kanal des Mikrocomputers (30) zur individuellen Temperatursteuerung jeder Komponente in einer geschlossenen Schleife verbunden ist, wobei das Verfahren durch die Schritte gekennzeichnet ist :

a) die Steuersignale vom Mikrocomputer (30) an die Steuerelektroden der signalgesteuerten Schalter (R1-Rn) sämtlicher Kanäle zu überprüfen, um zu erkennen, ob sich alle auf Schalterdeaktivierungspegeln befinden, die dazu ausgelegt sind, ihre zugehörigen signalgesteuerten Schalter (R1-Rn) nichtleitend zu machen, wodurch in Betracht gezogen wird, daß sich sämtliche Sensortemperaturen oberhalb ihrer jeweiligen Sollwerttemperaturen liegen ;

b) anschließend, wenn sich sämtliche Steuersignale auf Schalterdeaktivierungspegeln befinden, für einen an einem bestimmten Kanal angeschlossenen, zu prüfenden Sensor (S1 ;... ; Sn) zu bestimmen, ob seine Temperatur seit dem Zeitpunkt angestiegen ist, an dem der in den zugehörigen signalgesteuerten Schalter eingegebene Steuersignalpegel kürzlich auf seinen gegenwärtigen Schalterdeaktivierungspegel geschaltet worden ist ; und

c) bei Ermittlung einer ansteigenden Sensortemperatur im Schritt b) einen Heizungsstromfluß mit einem gemeinsam an sämtliche Heizungserregerkreise angeschlossenen Stromsensor (26) zu messen und eine Anzeige eines kurzgeschlossenen signalgesteuerten Schalters abzugeben, falls ein bedeutender Heizungsstrom gemessen wird.

3. Verfahren zur Erkennung von Heizkreisfehlern in einem Mehrkomponenten-Heißkleber-Beheizungssystem, bei welchem jede Komponente eine elektrische Heizung (H1 ;... ; Hn) und einen in Reihe geschalteten signalgesteuerten Schalter (R1 ;... ; Rn) aufweist und die Reihenkombinationen von Heizung (H1 ;... ; Hn) und signalgesteuertem Schalter (R1 ;...; Rn) der Komponenten parallel zueinander geschaltet sind, wobei eine Steuerelektrodenausgangsleitung (C1 ;... ; Cn), die an eine Steuerelektrode des signalgesteuerten Schalters (R1 ;... ; Rn) jeder Komponente angeschlossen ist, mit einem unterschiedlichen Kanal eines Mehrkanal-Mikrocomputers (30) verbunden ist, und bei welchem ein Temperatursensor (S1 ; ... ; Sn) für jede Komponente vorgesehen ist, wobei der Temperatursensor mit dem entsprechenden Kanal des Mikrocomputers (30) zur individuellen Temperatursteuerung jeder Komponente in einer geschlossenen Schleife verbunden ist, wobei das Verfahren durch die Schritte gekennzeichnet ist :

a) die Steuersignale vom Mikrocomputer (30) an die Steuerelektroden der signalgesteuerten Schalter (R1-Rn) sämtlicher Kanäle zu überprüfen, um zu erkennen, ob sich alle auf Schalterdeaktivierungspegeln befinden, die dazu ausgelegt sind, ihre zugehörigen signalgesteuerten Schalter (R1-Rn) nichtleitend zu machen, wodurch in Betracht gezogen wird, daß sich sämtliche Sensortemperaturen oberhalb ihrer jeweiligen Sollwerttemperaturen liegen ;

b) anschließend, wenn sich sämtliche Steuersignale auf Schalterdeaktivierungspegeln befinden, für einen an einem bestimmten Kanal angeschlossenen, zu prüfenden Sensor (S1 ;... ; Sn) zu bestimmen, ob seine Temperatur seit dem Zeitpunkt angestiegen ist, an dem der in den zugehörigen signalgesteuerten Schalter eingegebene Steuersignalpegel kürzlich auf seinen gegenwärtigen Schalterdeaktivierungspegel geschaltet worden ist ; und

c) bei Ermittlung einer ansteigenden Sensortemperatur im Schritt b) einen Heizungsstrom mit einem gemeinsam an sämtliche Heizungserregungskreise angeschlossenen Stromsensor (26) zu messen und eine Anzeige eines normal arbeitenden signalgesteuerten Schalters abzugeben, falls ein bedeutender Heizungsstrom nicht gemessen wird.

4. Verfahren zur Erkennung von Heizkreisfehlern in einem Mehrkomponenten-Heißkleber-Beheizungssystem, bei welchem jede Komponente eine elektrische Heizung (H1 ;... ; Hn) und einen in Reihe geschalteten signalgesteuerten Schalter (R1 ;... ; Rn) aufweist und die Reihenkombinationen von Heizung (H1 ;... ; Hn) und signalgesteuertem Schalter (R1 ;...; Rn) der Komponenten parallel zueinander geschaltet sind, wobei eine Steuerelektrodenausgangsleitung (C1 ;... ; Cn), die an eine Steuerelektrode des signalgesteuerten Schalters (R1 ;... ; Rn) jeder Komponente angeschlossen ist, mit einem unterschiedlichen Kanal eines Mehrkanal-Mikrocomputers (30) verbunden ist, und bei welchem ein Temperatursensor (S1 ; ... ; Sn) für jede Komponente vorgesehen ist, wobei der Temperatursensor mit dem entsprechenden Kanal des Mikrocomputers (30) zur individuellen Temperatursteuerung jeder Komponente in einer geschlossenen Schleife verbunden ist, wobei das Verfahren durch die Schritte gekennzeichnet ist :

a) die Steuersignale vom Mikrocomputer (30) an die Steuerelektroden der signalgesteuerten Schalter (R1-Rn) aller Kanäle zu überprüfen, um zu erkennen, ob sich einer auf einem Schalteraktivierungspegel befindet, der dazu ausgelegt ist, den zugehörigen signalgesteuerten Schalter (R1 ;... ; Rn) leitend zu machen, und zwar für mindestens einen wesentlichen Abschnitt seines maximalen Arbeitszyklus, wodurch in Betracht gezogen wird, daß sich eine Sensortemperatur (S1 ;... ; Sn) im wesentlichen unterhalb ihrer Sollwerttemperatur befindet ;

b) anschließend, wenn sich das Steuersignal eines Kanals auf einem Schalteraktivierungspegel befindet, für den an diesen bestimmten zu prüfenden Kanal angeschlossenen Sensor (S1 ;... ; Sn) zu ermitteln, ob seine Temperatur seit dem Zeitpunkt gesunken ist, an dem der in den zugehörigen signalgesteuerten Schalter (R1 ;... ; Rn) eingegebene Steuersignalpegel kürzlich auf seinen Schalteraktivierungspegel geschaltet worden ist ; und

c) bei Erkennung einer nicht absinkenden Sensortemperatur im Schritt b) eine Anzeige eines normal arbeitenden signalgesteuerten Schalters für diesen überprüften Kanal abzugeben.

5. Verfahren zur Erkennung von Heizkreisfehlern in einem Mehrkomponenten-Heißkleber-Beheizungssystem, bei welchem jede Komponente eine elektrische Heizung (H1 ;... ; Hn) und einen in Reihe geschalteten signalgesteuerten Schalter (R1 ;... ; Rn) aufweist und die Reihenkombinationen von Heizung (H1 ;... ; Hn) und signalgesteuertem Schalter (R1 ;...; Rn) der Komponenten parallel zueinander geschaltet sind, wobei eine Steuerelektrodenausgangsleitung (C1 ;... ; Cn), die an eine Steuerelektrode des signalgesteuerten Schalters (R1 ;... ; Rn) jeder Komponente angeschlossen ist, mit einem unterschiedlichen Kanal eines Mehrkanal-Mikrocomputers (30) verbunden ist, und bei welchem ein Temperatursensor (S1 ; ... ; Sn) für jede Komponente vorgesehen ist, wobei der Temperatursensor mit dem entsprechenden Kanal des Mikrocomputers (30) zur individuellen Temperatursteuerung jeder Komponente in einer geschlossenen Schleife verbunden ist, wobei das Verfahren durch die Schritte gekennzeichnet ist :

a) die Steuersignale vom Mikrocomputer (30) an die Steuerelektroden der signalgesteuerten Schalter (R1-Rn) aller Kanäle zu überprüfen, um zu erkennen, ob sich einer auf einem Schalteraktivierungspegel befindet, der dazu ausgelegt ist, den zugehörigen signalgesteuerten Schalter (R1 ;... ; Rn) leitend zu machen, und zwar für mindestens einen wesentlichen Abschnitt seines maximalen Arbeitszyklus, wodurch in Betracht gezogen wird, daß sich eine Sensortemperatur (S1 ;... ; Sn) im wesentlichen unterhalb ihrer Sollwerttemperatur befindet ;

b) anschließend, wenn sich das Steuersignal eines Kanals auf einem Schalteraktivierungspegel befindet, für den an diesen bestimmten zu prüfenden Kanal angeschlossenen Sensor (S1 ;... ; Sn) zu ermitteln, ob seine Temperatur seit dem Zeitpunkt gesunken ist, an dem der in den zugehörigen signalgesteuerten Schalter (R1 ;... ; Rn) eingegebene Steuersignalpegel kürzlich auf seinen Schalteraktivierungspegel geschaltet worden ist ; und

c) bei Ermittlung einer sinkenden Sensortemperatur für den überprüften Kanal im Schritt b) augenblickliche Deaktivierungssignale gleichzeitig an allen anderen Kanälen anzulegen und währenddessen den Heizungsstromfluß mit einem gemeinsam an alle Heizungserregerkreise angeschlossenen Stromsensor (26) zu messen und für den überprüften Kanal eine Anzeige einer leerlaufenden Heizung abzugeben, falls ein unbedeutender Heizungsstrom gemessen wird.

6. Verfahren zur Erkennung von Heizkreisfehlern in einem Mehrkomponenten-Heißkleber-Beheizungssystem, bei welchem jede Komponente eine elektrische Heizung (H1 ;... ; Hn) und einen in Reihe geschalteten signalgesteuerten Schalter (R1 ;... ; Rn) aufweist und die Reihenkombinationen von Heizung (H1 ;... ; Hn) und signalgesteuertem Schalter (R1 ;... ; Rn) der Komponenten parallel zueinander geschaltet sind, wobei eine Steuerelektrodenausgangsleitung (C1 ;... ; Cn), die an eine Steuerelektrode des signalgesteuerten Schalters (R1 ;... ; Rn) jeder Komponente angeschlossen ist, mit einem unterschiedlichen Kanal eines Mehrkanal-Mikrocomputers (30) verbunden ist, und bei welchem ein Temperatursensor (S1 ; ... ; Sn) für jede Komponente vorgesehen ist, wobei der Temperatursensor mit dem entsprechenden Kanal des Mikrocomputers (30) zur individuellen Temperatursteuerung jeder Komponente in einer geschlossenen Schleife verbunden ist, wobei das Verfahren durch die Schritte gekennzeichnet ist :

a) die Steuersignale vom Mikrocomputer (30) an die Steuerelektroden der signalgesteuerten Schalter (R1-Rn) aller Kanäle zu überprüfen, um zu erkennen, ob sich einer auf einem Schalteraktivierungspegel befindet, der dazu ausgelegt ist, den zugehörigen signalgesteuerten Schalter (R1 ;... ; Rn) leitend zu machen, und zwar für mindestens einen wesentlichen Abschnitt seines maximalen Arbeitszyklus, wodurch in Betracht gezogen wird, daß sich eine Sensortemperatur (S1 ;... ; Sn) im wesentlichen unterhalb ihrer Sollwerttemperatur befindet ;

b) anschließend, wenn sich das Steuersignal eines Kanals auf einem Schalteraktivierungspegel befindet, für den an diesen bestimmten zu prüfenden Kanal angeschlossenen Sensor (S1 ;... ; Sn) zu ermitteln, ob seine Temperatur seit dem Zeitpunkt gesunken ist, an dem der in den zugehörigen signalgesteuerten Schalter (R1 ;... ; Rn) eingegebene Steuersignalpegel kürzlich auf seinen Schalteraktivierungspegel geschaltet worden ist ; und

c) bei Ermittlung einer sinkenden Sensortemperatur für den überprüften Kanal im Schritt b) augenblickliche Deaktivierungssignale gleichzeitig an allen anderen Kanäle anzulegen und währenddessen den Heizungsstromfluß mit einem gemeinsamen an alle Heizungserregerkreise angeschlossenen Stromsensor (26) zu messen und für den überprüften Kanal eine Anzeige eines normal arbeitenden Heizungskreises abzugeben, falls ein bedeutender Heizungsstrom gemessen wird.

## Revendications

1. Procédé pour détecter des dysfonctionnements de circuits de chauffage dans un système à plusieurs composants pour chauffer une colle thermofusible, dans lequel chaque composant comprend un dispositif de chauffage électrique (H1 ;... ; Hn) connecté en série avec un interrupteur (R1 ;... ; Rn) commandé par signaux et dans lequel les branchements en série d'un dispositif de chauffage (H1 ;... ; Hn) et d'un interrupteur (R1 ; ... ; Rn) commandé par signaux des différents composants sont connectés en parallèle entre eux, dans lequel une ligne de sortie d'électrode de commande (C1 ;... ; Cn), reliée à une électrode de commande de l'interrupteur (R1 ;... ; Rn) commandé par signaux de chaque composant, est connectée à un canal différent d'un micro-ordinateur multicanal (30) et dans lequel un capteur de température (S1 ;... ; Sn) est prévu pour chaque composant, le capteur de température étant connecté au canal respectif du micro-ordinateur (30) en vue de la commande individuelle à boucle fermée de la température de chaque composant, caractérisé par les étapes consistant à :

a) contrôler les signaux de commande envoyés par le micro-ordinateur (30) aux électrodes de commande des interrupteurs commandés par signaux (R1-Rn) de tous les canaux pour déterminer s'ils ont tous des niveaux de désactivation d'interrupteur destinés à rendre non-passants les interrupteurs commandés par signaux (R1-Rn) qui leur sont coordonnés, ce qui signifie que toutes les températures des capteurs sont supérieures à leurs valeurs de consigne respectives ;

b) déterminer ensuite, lorsque tous les signaux de commande sont à des niveaux de désactivation d'interrupteur, pour un capteur (S1 ;... ; Sn) coordonné à un canal spécifique à contrôler, si sa température s'est élevée depuis le moment où le niveau du signal de commande appliqué à l'entrée à l'interrupteur commandé par signaux qui lui est coordonné, a été commuté en dernier à son niveau actuel de désactivation d'interrupteur ; et

c) en réponse à la détection dans l'étape b) d'une température de capteur qui ne s'est pas élevée, produire une indication d'état normal de l'interrupteur commandé par signaux.

2. Procédé pour détecter des dysfonctionnements de circuits de chauffage dans un système à plusieurs composants pour chauffer une colle thermofusible, dans lequel chaque composant comprend un dispositif de chauffage électrique (H1 ;... ; Hn) connecté en série avec un interrupteur (R1 ;... ; Rn) commandé par signaux et dans lequel les branchements en série d'un dispositif de chauffage (H1 ;... ; Hn) et d'un interrupteur (R1 ; ... ; Rn) commandé par signaux des différents composants sont connectés en parallèle entre eux, dans lequel une ligne de sortie d'électrode de commande (C1 ;... ; Cn) reliée à une électrode de commande de l'interrupteur (R1 ;... ; Rn) commandé par signaux de chaque composant, est connectée à un canal différent d'un micro-ordinateur multicanal (30) et dans lequel un capteur de température (S1 ;... ; Sn) est prévu pour chaque composant, le capteur de température étant connecté au canal respectif du micro-ordinateur (30) en vue de la commande individuelle à boucle fermée de la température de chaque composant, caractérisé par les étapes consistant à :

a) contrôler les signaux de commande envoyés par le micro-ordinateur (30) aux électrodes de commande des interrupteurs commandés par signaux (R1-Rn) de tous les canaux pour déterminer s'ils ont tous des niveaux de désactivation d'interrupteur destinés à rendre non-passants les interrupteurs commandés par signaux (R1-Rn) qui leur sont coordonnés, ce qui signifie que toutes les températures des capteurs sont supérieures à leurs valeurs de consigne respectives ;

b) déterminer ensuite, lorsque tous les signaux de commande sont à des niveaux de désactivation d'interrupteur, pour un capteur (S1 ;... ; Sn) coordonné à un canal spécifique à contrôler, si sa température s'est élevée depuis le moment où le niveau du signal de commande appliqué à l'entrée à l'interrupteur commandé par signaux qui lui est coordonné, a été commuté en dernier à son niveau actuel de désactivation d'interrupteur ; et

c) en réponse à la détection, dans l'étape b), que la température de capteur s'est élevée, détecter le courant circulant à travers le dispositif de chauffage au moyen d'un capteur de courant (26) commun à tous les circuits d'alimentation des dispositifs de chauffage et fournir une indication de court-circuit d'interrupteur commandé par signaux si un courant de chauffage important est détecté.

3. Procédé pour détecter des dysfonctionnements de circuits de chauffage dans un système à plusieurs composants pour chauffer une colle thermofusible, dans lequel chaque composant comprend un dispositif de chauffage électrique (H1 ;... ; Hn) connecté en série avec un interrupteur (R1 ;... ; Rn) commandé par signal et dans lequel les branchements en série d'un dispositif de chauffage (H1 ;... ; Mn) et d'un interrupteur (R1 ; ... ; Rn) commandé par signaux des différents composants sont connectés en parallèle entre eux, dans lequel une ligne de sortie d'électrode de commande (C1 ;...; Cn) reliée à une électrode de commande de l'interrupteur (R1 ;... ; Rn) commandé par signaux de chaque composant, est connectée à un canal différent d'un micro-ordinateur multicanal (30) et dans lequel un capteur de température (S1 ;... ; Sn) est prévu pour chaque composant, le capteur de température étant connecté au canal respectif du micro-ordinateur (30) en vue de la commande individuelle à boucle fermée de la température de chaque composant, caractérisé par les étapes consistant à :

a) contrôler les signaux de commande envoyés par le micro-ordinateur (30) aux électrodes de commande des interrupteurs commandés par signaux (R1-Rn) de tous les canaux pour déterminer s'ils ont tous des niveaux de désactivation d'interrupteur destinés à rendre non-passants les interrupteurs commandés par signaux (R1-Rn) qui leur sont coordonnés, ce qui signifie que toutes les températures des capteurs sont supérieures à leurs valeurs de consigne respectives ;

b) déterminer ensuite, lorsque tous les signaux de commande sont à des niveaux de désactivation d'interrupteur, pour un capteur (S1 ;... ; Sn) coordonné à un canal spécifique à contrôler, si sa température s'est élevée depuis le moment où le niveau du signal de commande appliqué à l'entrée à l'interrupteur commandé par signaux qui lui est coordonné, a été commuté en dernier à son niveau actuel de désactivation d'interrupteur ; et

c) en réponse à la détection, dans l'étape b), que la température de capteur s'est élevée, détecter le courant circulant à travers le dispositif de chauffage par un capteur de courant (26) commun à tous les circuits d'alimentation des dispositifs de chauffage et fournir une indication d'état normal d'interrupteur commandé par signal en l'absence de détection d'un courant de chauffage important.

4. Procédé pour détecter des dysfonctionnements de circuits de chauffage dans un système à plusieurs composants pour chauffer une colle thermofusible, dans lequel chaque composant comprend un dispositif de chauffage électrique (H1 ;... ; Hn) connecté en série avec un interrupteur (R1 ;... ; Rn) commandé par signaux et dans lequel les branchements en série d'un dispositif de chauffage (H1 ;... ; Hn) et d'un interrupteur (R1 ; ... ; Rn) commandé par signaux des différents composants sont connectés en parallèle entre eux, dans lequel une ligne de sortie d'électrode de commande (C1 ;... ; Cn) reliée à une électrode de commande de l'interrupteur (R1 ;... ; Rn) commandé par signaux de chaque composant, est connectée à un canal différent d'un micro-ordinateur multicanal (30) et dans lequel un capteur de température (S1 ;... ; Sn) est prévu pour chaque composant, le capteur de température étant connecté au canal respectif du micro-ordinateur (30) en vue de la commande individuplle à boucle fermée de la température de chaque composant, caractérisé par les étapes consistant à :

    a) contrôler les signaux de commande envoyés par le micro-ordinateur (30) aux électrodes de commande des interrupteurs commandés par signaux (R1-Rn) de tous les canaux pour déterminer si l'un quelconque de ces signaux présente un niveau d'activation d'interrupteur destiné à rendre passant l'interrupteur commandé par signaux (R1 ;... ; Rn) qui lui est coordonné pendant au moins une partie substantielle de son cycle d'actionnement maximal, ce qui réflète une température de capteur (S1 ;... ; Sn) sensiblement inférieure à sa valeur de consigne ;

    b) déterminer ensuite, lorsque le signal de commande d'un canal est à un niveau d'activation d'interrupteur, pour le capteur (S1 ;... ; Sn) coordonné à ce canal spécifique à contrôler, si sa température a diminué depuis le moment où le niveau du signal de commande appliqué à l'entrée de l'interrupteur commandé par signaux (R1 ;... ; Rn) qui lui est coordonné a été commuté en dernier à son niveau d'activation d'interrupteur ; et

    c) en réponse à la détection, dans l'étape b), que la température de capteur n'a pas diminuée, fournir une indication d'état normal d'interrupteur commandé par signaux pour ce canal contrôlé.

5. Procédé pour détecter des dysfonctionnements de circuits de chauffage dans un système à plusieurs composants pour chauffer une colle thermofusible, dans lequel chaque composant comprend un dispositif de chauffage électrique (H1 ;... ; Hn) connecté en série avec un interrupteur (R1 ;... ; Rn) commandé par signaux et dans lequel les branchements en série d'un dispositif de chauffage (H1 ;... ; Hn) et d'un interrupteur (R1 ; ... ; Rn) commandé par signaux des différents composants ;ont connectés en parallèle entre eux, dans lequel une ligne de sortie d'électrode de commande (C1 ;... ; Cn) reliée à une électrode de commande de l'interrupteur (R1 ;... ; Rn) commandé par signaux de chaque composant, est connectée à un canal différent d'un micro-ordinateur multicanal (30) et dans lequel un capteur de température (S1 ;... ; Sn) est prévu pour chaque composant, le capteur de température étant connecté au canal respectif du micro-ordinateur (30) en vue de la commande individuelle à boucle fermée de la température de chaque composant, caractérisé par les étapes consistant à :

    a) contrôler les signaux de commande envoyés par le micro-ordinateur (30) aux électrodes de commande des interrupteurs commandés par signaux (R1-Rn) de tous les canaux pour déterminer si l'un quelconque de ces signaux présente un niveau d'activation d'interruptteur destiné à rendre passant l'interrupteur commandé par signaux (R1 ;... ; Rn) qui lui est coordonné pendant au moins une partie substantielle de son cycle d'actionnement maximal, ce qui reflète une températeure de capteur (S1 ;... ; Sn) sensiblement inférieure à sa valeur de consigne ;

    b) déterminer ensuite, lorsque le signal de commande d'un canal est à un niveau d'activation d'interrupteur, pour le capteur (S1 ;... ; Sn) coordonné à ce canal spécifique à contrôler, si sa température a diminué depuis le moment où le niveau du signal de commande appliqué à l'entrée de l'interrupteur commandé par signaux (R1 ;... ; Rn) qui lui est coordonné a été commuté en dernier à son niveau d'activation d'interrupteur ; et

    c) en réponse à la détection, dans l'étape b), que la température de capteur du canal testé a diminué, appliquer simultanément des signaux de désactivation momentanée à tous les autres canaux et, pendant ce temps, détecter le courant circulant à travers le dispositif de chauffage par un capteur de courant (26) commun à tous les circuits d'alimentation des dispositifs de chauffage et fournir une indication de coupure de circuit de chauffage pour le canal testé si un courant de chauffage insignifiant est détecté.

6. Procédé pour détecter des dysfonctionnements de circuits de chauffage dans un système à plusieurs composants pour chauffer une colle thermofusible, dans lequel chaque composant comprend un dispositif de chauffage électrique (H1 ;... ; Hn) connecté en série avec un interrupteur (R1 ;... ; Rn) commandé par signaux et dans lequel les branchements en série d'un dispositif de chauffage (H1 ;... ; Hn) et d'un interrupteur (R1 ;... ; Rn) commandé par signaux des différents composants sont connectés en parallèle entre eux, dans lequel une ligne de sortie d'électrode de commande (C1 ;... ; Cn) reliée à une électrode de commande de l'interrupteur (R1 ;... ; Rn) commandé par signal de chaque composant, est connectée à un canal différent d'un micro-ordinateur multicanal (30) et dans lequel un capteur de température (S1 ;... ; Sn) est prévu pour chaque composant, le capteur de température étant connecté au canal respectif du micro-ordinateur (30) en vue de la commande individuelle à boucle fermée de la température de chaque composant, caractérisé par les étapes consistant à :

    a) contrôler les signaux de commande envoyés par le micro-ordinateur (30) aux électrodes de commande des interrupteurs commandés par signal (R1-Rn) de tous les canaux pour déterminer si l'un quelconque de ces signaux présente un niveau d'activation d'interrupteur destiné à rendre passant l'interrupteur commandé par signaux (R1 ;... ; Rn) qui lui est coordonné pendant au moins une partie substantielle de son cycle d'actionnement minimal, ce qui reflète une température de capteur (S1 ;... ; Sn) sensiblement inférieure à sa valeur de consigne ;

b) déterminer ensuite, lorsque le signal de commande d'un canal est à un niveau d'activation d'interrupteur, pour le capteur (S1 ;... ; Sn) coordonné à ce canal spécifique à contrôler, si sa température a diminué depuis le moment où le niveau du signal de commande appliqué à l'entrée de l'interrupteur commandé par signal (R1 ;... ; Rn) qui lui est coordonné a été commuté en dernier à son niveau d'activation d'interrupteur ; et

c) en réponse à la détection, dans l'étape b), que la température de capteur du canal testé a diminué, appliquer simultanément des signaux de désactivation momentanée à tous les autres canaux et, pendant ce temps, détecter le courant circulant à travers le dispositif de chauffage par un capteur de courant (26) commun à tous les circuits d'alimentation des dispositifs de chauffage et fournir une indication d'état normal de circuit de chauffage pour le canal testé si un courant important de chauffage est détecté.

FIG. I

FIG. 2

**FIG. 3**